# EUROPÄISCHE PATENTSCHRIFT

(11) **EP 3 045 262 B1**
(45) Veröffentlichungstag und Bekanntmachung des Hinweises auf die Patenterteilung: **15.03.2017**
(21) Anmeldenummer: 15000099.0
(22) Anmeldetag: 16.01.2015
(51) Int. Cl.: B23P 19/02, B25B 5/06, B25B 27/06, F22B 37/00, F22B 37/58, F28F 11/00

(54) **Verankerungskralle für Wärmetauscherrohre**
Anchoring claw for heat exchanger tubes
Griffe d'ancrage pour tubes d'échangeurs thermiques

(43) Veröffentlichungstag der Anmeldung: 20.07.2016
(73) Patentinhaber: Westinghouse Electric Germany GmbH, 68167 Mannheim (DE)
(72) Erfinder: Ziegelmeyer, Fritz, 76669 Bad Schönborn (DE)
(74) Vertreter: Eickmeyer, Dietmar

(56) Entgegenhaltungen:
- EP-A1- 0 796 696
- DE-A1- 4 111 555
- US-A- 4 006 930
- US-A- 4 077 102

## Beschreibung

Die Erfindung betrifft ein Verankerungskralle für Wärmetauscherrohre, umfassend eine hohlzylindrische Spannhülse aus einem federnden Material, wobei die die Spannhülse längs ihrer axialen Erstreckung wenigstens einen axial geschlitzten Trägerbereich aufweist und wobei im Inneren der Spannhülse Druckmittel zur Weitung des Durchmessers des Trägerbereiches vorgesehen sind, um so einen Druck von der radialen Außenfläche des Trägerbereiches der Spannhülse auf die Innenwandung eines umgebenden Wärmetauscherrohres mit auf den Außendurchmesser der Spannhülse angepasstem Innendurchmesser auszuüben.

Es ist allgemein bekannt, dass in Kraftwerken, insbesondere in nukleartechnischen Anlagen, Dampferzeuger zum Einsatz kommen und zwar als primäre Wärmetauscher, welche das Trennglied zwischen primärem und sekundärem Kühlkreislauf darstellen. Hierbei gelten höchste Sicherheitsanforderungen um jegliche Gefährdung für Personal und Umwelt auszuschließen.

Ein Dampferzeuger umfasst eine Vielzahl, beispielsweise einige hundert, an vorzugsweise parallel ausgerichteten Dampferzeugerrohren, welche beispielsweise einen Innendurchmesser von 20mm bei einer Länge von einigen Metern aufweisen. An ihren Enden sind die Dampferzeugerrohre mit einer jeweiligen gelochten Bodenplatte eines diese umgebenden Behältnisses verschweißt, so dass die Dampferezeugerrohre das Behältnis hermetisch von diesem getrennt durchqueren und ein Wärmetauscher beziehungsweise ein Dampferzeuger gebildet ist.

Insbesondere in den Dampferzeugern kerntechnischer Anlagen werden zur Minimierung jeglichen Risikos regelmäßige Untersuchungen und gegebenenfalls notwendige Reparaturen der Dampferzeugerrohre durchgeführt.

Bei einem erkannten Defekt eines Rohres, beispielsweise einem Riss, ist das Dampferzeugerrohr aus dem Dampferzeuger zu ziehen und zu reparieren beziehungsweise durch ein anderes Dampferzeugerrohr zu ersetzen. Aber auch zu reinen Analysezwecken kann es notwendig sein, ein Dampferzeugerrohr aus dem Dampferzeuger herauszuziehen.

Aufgrund der Schwächung eines Dampferzeugerrohres durch einen Defekt ist es nicht sicher möglich, dieses durch Ausübung einer Zugkraft, beispielsweise entsprechend 4t bis 5t, komplett aus dem Dampferzeuger herauszuziehen. Vielmehr ist damit zu rechnen, dass das Dampferzeugerrohr an seiner defekten Stelle bricht und so ein Teil des Dampferzeugerrohres unzugänglich im Dampferzeuger verbleibt.

Beim Ziehen von Dampferzeugerrohren stellt sich die technische Herausforderungen, eine genügend feste Verbindung zwischen dem herauszuziehenden Dampferzeugerrohr und einem Zugmechanismus zu schaffen, die auch für Zugkräfte entsprechend 4t bis 5t ausgelegt ist. Es ist zudem gegebenenfalls für eine mechanische Stabilisierung eines durch einen Defekt geschwächten Abschnitts eines Dampferzeugerrohres zu sorgen, um so ein sicheres Ziehen zu gewährleisten.

Gemäß dem Stand der Technik wird hierfür beispielsweise eine Einschraubkralle verwendet, die mittels einer Einschraubvorrichtung mit einem bestimmten Drehmoment an ein zugängliches Ende des zu ziehenden Dampferzeugerrohres eingeschraubt wird. Hierzu ist zunächst die am zugänglichen Ende des Dampferzeugerrohres vorgesehene Schweißnahtverbindung mit der Bodenplatte abzutragen. Weiterhin wird der Einschraubbereich durch Liniennähte wärmebehandelt, damit das Einschraubende des Dampferzeugerrohres weicher wird.

Nachteilig hierbei ist die Notwendigkeit einer sehr aufwändigen, zeitraubenden und sensiblen Vorgehensweise. Zudem kann es durch den hohen radialen Druck der Einschraubkralle zu einer Durchmesservergrößerung des Dampferzeugerrohres kommen, welche während des Ziehvorganges nicht kontrollierbar ist. Darüber hinaus ist eine Einschraubkralle jeweils nur an einem Ende eines Dampferzeugerrohres einsetzbar.

Eine weitere Möglichkeit, eine zugfeste Verbindung mit einem Dampferzeugerrohr herzustellen besteht in einer Verankerungskralle der eingangs genannten Art. Diese wird mittels eines Führungsmechanismus in ein herauszuziehendes Dampferzeugerrohr eingeführt und mittels einer Hydraulikflüssigkeit unter Druck gesetzt, gespannt und gezogen. Eine derartige Verankerungskralle ist beispielsweise in der EP 0 796 696 A1, bzw. in der Patenschrift DE 69712396 T2 offenbart. Vorzugsweise wird eine derartige Verankerungskralle genau an einer defekten Stelle des Dampferzeugerrohres angesetzt, um diese mechanisch zu stabilisieren.

Nachteilig ist hierbei, dass es durch das Spannen der Verankerungskralle, also der radialen Aufweitung der Spannhülse, zu einer deutlichen Aufweitung des zu ziehenden Dampferzeugerrohres kommen kann, wodurch dessen strukturelle Integrität weiter geschwächt wird. Da eine derartige Verankerungskralle auch beispielsweise in der Mitte eines Dampferzeugerrohres eingesetzt werden kann, entsteht das zusätzliche Problem, dass ein aufgeweitetes Dampferzeugerrohr beim Ziehvorgang an seiner aufgeweiteten Stelle nicht durch das zugehörige Loch der gelochten Bodenplatte des Dampferzeugers gezogen werden kann. Die übermäßige Aufweitung einer geschwächten Stelle verhindert außerdem die sichere Analyse des Defektes. Ausgehend von diesem Stand der Technik ist es Aufgabe der Erfindung, eine Verankerungskralle bereitzustellen, welche beim Ziehen bzw. Entfernen eines Dampferzeugerrohres das Risiko eines Rohrbruchs minimiert und bei welcher eine Durchmesservergrößerung des Dampferzeugerrohres so gering wie möglich ist.

Die Aufgabe wird gelöst durch eine Verankerungskralle für Dampferzeugerrohre mit den Merkmalen des Anspruchs 1.

Diese ist dadurch gekennzeichnet, dass die radiale Außenfläche des Trägerbereiches der hohlzylindrischen Spannhülse erhobene Bereiche aufweist, wobei der summarische Anteil der erhobenen Bereiche an der radialen Gesamtaußenfläche des Trägerbereiches im Bereich von 2% bis 25% liegt. Alle nicht erhobenen Bereiche haben hierbei im unaufgeweiteten Zustand der Spannhülse den gleichen radialen Abstand zur Mittelachse.

Die erhobenen Bereiche sind hierbei als Einpressflächen anzusehen, welche unter Druckbeaufschlagung bei Überschreitung der zulässigen Flächenpressung des jeweiligen Dampferzeugerrohres unter lokaler Verformung der Innenseite der Rohrwandung eine formschlüssige Verbindung mit der Rohrwandung eingehen. Um eine Verformung der erhobenen Bereiche zu vermeiden, ist das Material der Spannhülse härter zu wählen als das einer Wandung eines Dampferzeugerrohres.

Typischerweise wird der Trägerbereich der Spannhülse gefräst, das heißt, die nicht erhobenen Bereiche werden bei der Herstellung abgefräst, so dass die erhobenen Bereiche als Einpressflächen erhalten bleiben. Dies hat den Vorteil, dass die Erhebungen und die Spannhülse monolithisch und damit mechanisch extrem belastbar sind.

Der Trägerbereich ist der radiale geschlitzte Außenbereich einer Spannhülse, welcher mit Einpressflächen versehen ist und in seinem Durchmesser mittels einer Druckvorrichtung aufgeweitet werden kann. Vorzugsweise ist die Spannhülse in diesem Bereich etwas dickwandiger als in den Übergangsbereichen zu den ungeschlitzten Bereichen, welche idealerweise etwas flexibler sind. Über ihren gesamten Umfang kann eine Spannhülse beispielsweise 6 bis 16 Schlitze aufweisen. Die Schlitzung kann auch länger ausgeführt sein als der eigentliche Trägerbereich.

Um eine erfindungsgemäße Verankerungskralle in ein Dampferzeugerrohr einführen zu können, muss deren Außendurchmesser geringfügig kleiner, beispielsweise um 0,2 mm bis 1,5mm, sein als der Innendurchmesser des zu ziehenden Dampferzeugerrohres von beispielsweise 20mm.

Die Grundidee der Erfindung besteht darin, dass der prozentuale Anteil der Einpressflächen an der radial äußeren Gesamtfläche des Trägerbereiches deutlich gegenüber dem üblichen Wert von 50% - wie beispielsweise bei einem Gewinde üblich - reduziert wird.

Die gesamte radiale Druckbelastung auf ein Dampferzeugerrohr in seinem Trägerbereich ist ausschlaggebend für dessen Weitung, die es erfindungsgemäß zu reduzieren gilt. Bei einer prozentualen Reduktion des Anteils der Einpressflächen von 50% auf 10% beispielsweise ist bei gleicher Eindringtiefe der verbleibenden Einpressflächen der gesamt benötigte Anpressdruck und damit die gesamte Belastung des Dampferzeugerrohres auf nur noch 20% reduziert. Dennoch ist die so gebildete Formschlussverbindung in der Lage, den erforderlichen Zugkräften entsprechend 4t bis 5t zu widerstehen. Somit ist bereits ein Druck von etwa 200 Bar zum Aufweiten der Spannhülse ausreichend, um eine hinreichend feste Formschlussverbindung herzustellen.

Die Untergrenze des genannten Wertebereiches von 2% bis 25% resultiert aus der minimal benötigten Festigkeit der erhobenen Bereiche gegenüber Scherkräften und die Obergrenze daraus, dass hier der erfindungsgemäße Vorteil zunehmend relativiert wird. Ein besonders bevorzugter Wertebereich für den summarischen Anteil der erhobenen Bereiche an der radialen Gesamtaußenfläche des Trägerbereiches liegt zwischen 5% und 20%.

Gemäß einer weiteren bevorzugten Ausgestaltungsform der Verankerungskralle sind die erhobenen Bereiche plateauähnlich ausgeprägt. Dies hat den Vorteil, dass die jeweiligen Erhebungen hierdurch im Vergleich zu einer spitzen Form eine erhöhte mechanische Stabilität gegenüber Scherkräften erhalten. Dies ist insbesondere vor dem Hintergrund des erfindungsgemäß verringerten Anteils an erhobenen Bereichen von Bedeutung. Durch die Plateauform wird somit in vorteilhafter Weise eine Erhöhung der maximal zulässigen Zugbelastung der erhobenen Bereiche erreicht.

Gemäß einer weiteren bevorzugten Ausgestaltungsvariante der erfindungsgemäßen Verankerungskralle weisen die erhobenen Bereiche eine gestreckte (Grundflächen-) Form auf, welche zumindest vorwiegend quer zur axialen Erstreckung der Spannhülse verläuft. Die Zugkraftbeanspruchung beim Herausziehen eines Dampferzeugerrohres wirkt axial. Somit wird mit einem quer zur axialen Richtung angeordneten länglichen Verlauf der erhobenen Bereiche eine verbesserte Zugkraftbeanspruchung erreicht.

Es können beispielsweise mehrere erhobene Bereiche ringähnlich um den Trägerbereich angeordnet sein. Dies hat den fertigungstechnischen Vorteil, dass das Verhältnis der Grundfläche der erhobenen Bereiche zur Gesamtaußenfläche des Trägerbereiches durch entsprechende Wahl der Breite der erhobenen Bereiche und dem axialen Abstand zwischen benachbarten erhobenen Ringen einfach zu beeinflussen ist.

Gemäß einer bevorzugten Ausgestaltungsform der Verankerungskralle sind mehrere erhobene Bereiche spiral- oder ringähnlich angeordnet, wobei die Spiralform sich auch über die Schlitze der Spannhülse hinweg erstreckt. Dies hat neben dem eben anhand der ringähnlichen Anordnung erläuterten fertigungstechnischen Vorteil den weiteren Vorteil, dass mittels Fräsen eine derartige Spiralform durch linearen Vorschub des Fräsers in einer reduzierten Zahl an Arbeitsgängen herstellbar ist.

Entsprechend einer weiteren bevorzugten Ausgestaltungsvariante der erfindungsgemäßen Verankerungskralle liegt die Breite der erhobenen Bereiche längs der axialen Erstreckung der Spannhülse zwischen 0,1mm und 1mm. Unter der Voraussetzung von länglichen und überwiegend quer verlaufenden Bereichen wird deren maximale Scherkraft von deren Breite bestimmt. Andererseits wird die maximale Scherkraft auch von der korrespondierenden formschlüssigen Vertiefung in der Wandung des Dampferzeugerrohres bestimmt.

Idealerweise ist die Breite einer Erhebung derart zu wählen, dass die damit erreichbare maximale Scherkraft der maximalen Scherkraft in der korrespondierenden formschlüssigen Vertiefung der Rohrwandung entspricht. Eine fertigungstechnische Grenze für eine minimale Breite liegt bei ca. 0,1 mm. Bei Breiten von größer 1 mm ist die maximale Scherkraft der Erhebung in der Regel größer als die der korrespondierenden Vertiefung. Je nach verwendeten Materialien und Eindringtiefe der korrespondierenden Vertiefung in die Rohrwandung können sich bevorzugte Bereiche ergeben, beispielsweise eine Breite im Bereich von 0,15mm bis 0,25mm.

Gemäß einer bevorzugten Variante der Verankerungskralle weisen die erhobenen Bereiche längs der axialen Erstreckung der Spannhülse einen Querschnitt auf, welcher trapezähnlich ausgeprägt ist. Somit ist einerseits die erfindungsgemäße Plateauform mit ihren zuvor erläuterten Vorteilen gewahrt, durch die leicht abgeschrägte Kantenform ist andererseits ein Eindringen einer Erhebung in die Wandung eines Dampferzeugerrohres erleichtert.

Gemäß einer besonders bevorzugten Ausführungsform der erfindungsgemäßen Verankerungskralle ist die radiale Höhe der erhobenen Bereiche der Außenfläche gegenüber der restlichen Außenfläche des Trägerbereiches im Bereich von 0,2mm bis 0,5mm erhöht. Somit ergeben sich Eindringtiefen von ca. 0,1mm bis 0,4mm, welche sich als besonders geeignet erweisen. Eine derartige Aufweitung der Spannhülse, dass auch die nicht erhobenen Bereiche die Innenwandung des Dampferzeugerohres berühren, ist vorzugsweise zu vermeiden.

Gemäß einer besonders bevorzugten Ausgestaltungsvariante der erfindungsgemäßen Verankerungskralle ist die Spannhülse aus gehärtetem Stahl gefertigt, welcher härter ist als das Material eines typischen Dampferzeugerrohres, um so ein problemloses formschlüssiges Eindringen einer Erhebung in die Rohrwandung zu gewährleisten. Insbesondere als geeignet hat sich gehärteter Stahl erwiesen.

Entsprechend einer weiteren Variante der Verankerungskralle umfassen die Druckmittel ein erstes und ein zweites ineinander verschachteltes Kunststoffrohr, welche im Inneren der Spannhülse zumindest im Trägerbereich angeordnet sind und welche durch axiale Endelemente begrenzt sind, so dass ein geschlossener Innenraum gebildet ist, der durch Beaufschlagung mit einem Druck radial aufweitbar ist. Kunststoff weist eine genügend hohe Elastizität für eine radiale Aufweitung auf. Durch die Doppelwandigkeit der formschlüssig ineinander verschachtelten Rohre ist deren mechanische Stabilität trotz Elastizität gegeben.

Als geeignetes Material für die Kunststoffrohre hat sich Polyurethan (PU) erwiesen. In besonders bevorzugter Weise sind die Kunststoffrohre aus dem Material *Vibrathane* gefertigt.

Gemäß einer bevorzugten Ausgestaltungsvariante der Verankerungskralle ist der geschlossenen Raum mit Wasser gefüllt, welches als Hydraulikflüssigkeit dient. Insbesondere bei kerntechnischen Anlagen mit besonders hohen Sicherheitsanforderungen ist die Verwendung einer neutralen Hydraulikflüssigkeit wie Wasser von Vorteil.

Um einen entsprechenden Druck auf den geschlossenen Raum ausüben zu können ist eine Hydraulikpumpe vorgesehen, welche strömungstechnisch mit dem geschlossenen Raum verbunden ist. Aufgrund der erfindungsgemäß erreichten Reduktion des benötigten Drucks können sich beispielsweise bereits 200 Bar Maximaldruck der Hydraulikpumpe als ausreichend erweisen.

Gemäß einer weiteren Ausgestaltungsform der Verankerungskralle sind zwei axial mit einem Zwischenbereich beabstandete axial geschlitzte Trägerbereiche vorgesehen. Dies hat den Vorteil, dass im Falle eines erkannten Dampferzeugerrohrdefektes die Verankerungskralle genau so weit in das Dampferzeugerrohr eingeführt werden kann, dass die defekte Stelle von dem Zwischenbereich überdeckt wird. Dieser weist keine Erhebungen auf, so dass keine zusätzliche mechanische Belastung auf den Defekt erfolgt. Durch die beiderseits des Zwischenbereiches erfolgende Verankerung der Verankerungskralle ist der Rohrbereich mit dem Defekt zusätzlich in vorteilhafter Weise stabilisiert. Eine Weitung beider Trägerbereiche kann durch ein und dieselben Druckmittel erfolgen.

Gemäß einer weiteren Variante der Verankerungskralle ist in dem Zwischenbereich eine Wirbelstromsonde vorgesehen, welche geeignet ist, fehlerbehaftete Bereiche eines die Spannhülse umgebenden Wärmetauscherrohres zu erkennen. Mit einer entsprechenden Auswertevorrichtung ist es dadurch ermöglicht, einen Defekt sicher zu erkennen und die Verankerungskralle entsprechend im Dampferzeugerrohr zu platzieren.

Entsprechend einer bevorzugten Ausgestaltungsform der Verankerungskralle ist diese an einem ihrer axialen Enden mit einer Greifziehstange oder einem Greifziehseil verbunden. Somit ist eine Verbindung zu einer Ziehvorrichtung ermöglicht, mittels welcher die Verankerungskralle zusammen mit einem Dampferzeugerrohr gezogen werden kann.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: eine erste exemplarische erste Spannhülse,
- Fig. 2: eine exemplarische zweite Spannhülse in einem Wärmetauscherrohr,
- Fig. 3: eine exemplarische Verankerungskralle,
- Fig. 4: einen exemplarischen Abschnitt einer radialen Außenfläche einer Spannhülse,
- Fig. 5: eine unaufgeweitete Spannhülse unter einer Wärmetauscherrohrwandung sowie
- Fig. 6: eine unaufgeweitete Spannhülse in Kontakt mit einer Wärmetauscherrohrwandung.

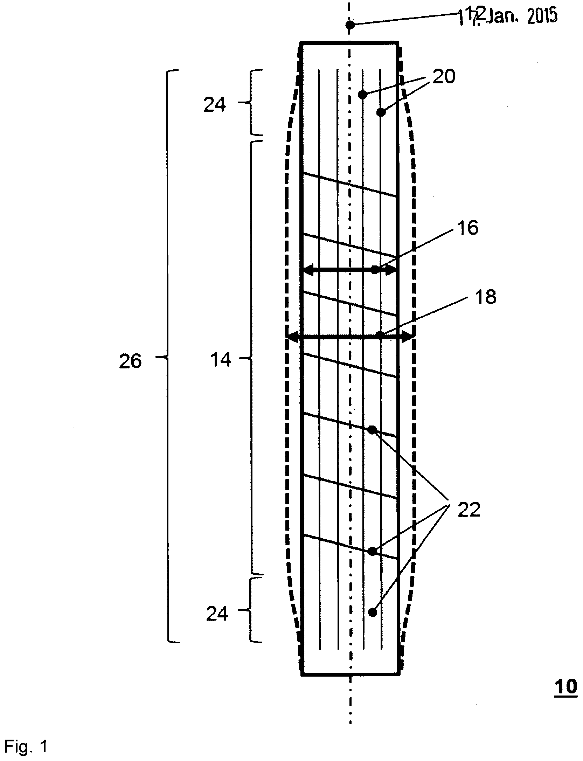

Fig. 1 zeigt eine erste exemplarische Spannhülse 10, welche sich längs einer Achse 12 erstreckt. Die Spannhülse weist um ihre axiale Mitte herum einen geschlitzten Trägerbereich 14 mit über dessen gesamten Umfang verteilten Schlitzen 20 auf. Der geschlitzte Trägerbereich 14 ist Teil eines längeren geschlitzten Bereiches 26, welcher zusätzlich zwei axial angrenzende geschlitzte Übergangsbereiche 24 aufweist. Die Spannhülse 10 ist in durchgezogener Linie mit ihrem unaufgeweiteten Durchmesser 16 und in gestrichelter Linie mit ihrem aufgeweiteten Durchmesser 18 angedeutet. Der Übergang von unaufgeweitetem Durchmesser 16 zu aufgeweitetem Durchmesser 18 erfolgt in den geschlitzten Übergangsbereichen 24, so dass der aufgeweitete Trägerbereich 14 über seine gesamte Länge einen konstanten Durchmesser aufweist. Die axiale Länge der Spannhülse beträgt in diesem Beispiel 300mm und deren Außendurchmesser 19mm. Mit der Bezugsnummer 22 sind mehrere spiralförmig um den Trägerbereich 14 verlaufende erhobene Bereiche angedeutet.

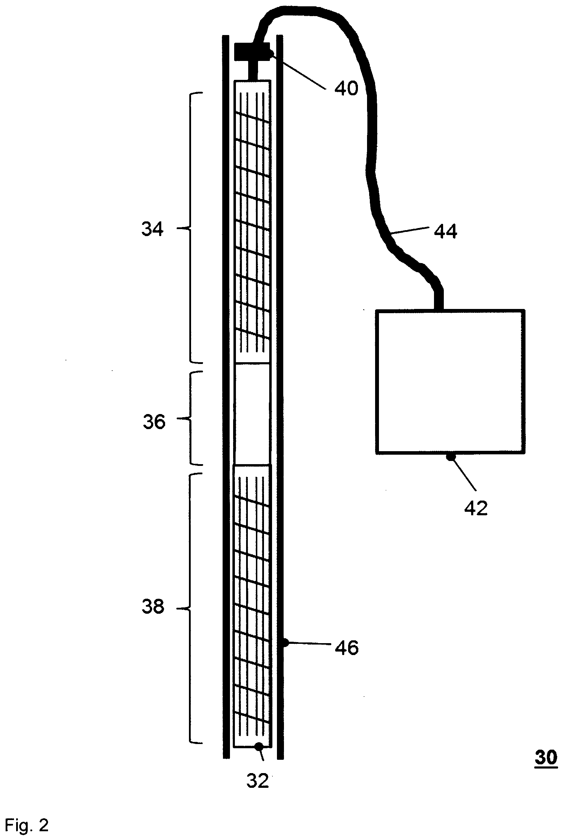

Fig. 2 zeigt in einer Skizze 30 eine exemplarische zweite Spannhülse 32 in einem Wärmetauscherrohr 46. Die Spannhülse 32 weist zwei geschlitzte Trägerbereiche 34, 38 auf, zwischen denen ein ungeschlitzter Zwischenbereich 36 vorgesehen ist. Im oberen Bereich der Spannhülse 32 ist eine Wirbelstromsonde 40 angeordnet. Mittels der Wirbelstromsonde 40 ist einen Erkennung von Defekten in der Rohrwandung ermöglicht, so dass der Zwischenbereich 36 direkt über eine erkannte defekte Stelle platziert werden kann.

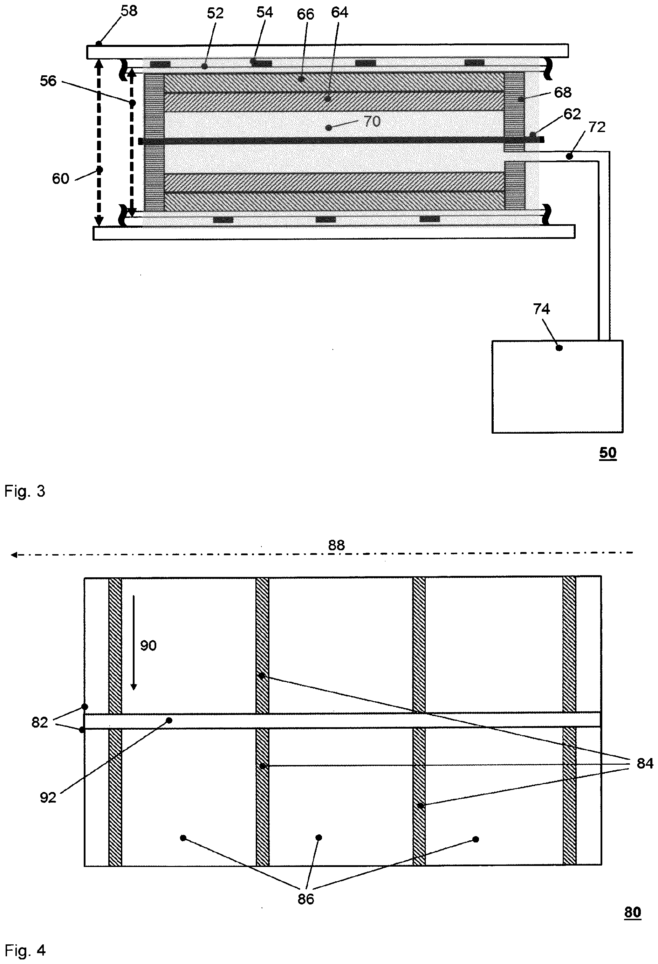

Fig. 3 zeigt eine exemplarische Verankerungskralle 50 in einer Querschnittsskizze. Eine Spannhülse 52 mit erhobenen Bereichen 54 ist in einem Wärmetauscherrohr 58 platziert. Der unaufgeweitete Außendurchmesser 56 der Spannhülse 52 ist geringfügig kleiner als der Innendurchmesser 60 des Wärmetauscherrohres 58, so dass diese problemlos gegeneinander beweglich sind. Im Inneren der Spannhülse 52 sind Druckmittel vorgesehen, um diese aufzuweiten und so eine formschlüssige Verbindung mit der Rohrwandung einzugehen.

Die Druckmittel umfassen ein erstes 64 und ein zweites 66 Kunststoffrohr, welche spaltfrei ineinander verschachtelt sind und sich direkt radial innen an die Innenfläche der Spannhülse 52 anschließen. Somit wird eine radiale Ausweitung der Kunststoffrohre 64, 66 direkt auf die Spannhülse 52 übertragen.

Eine radiale Aufweitung der Kunststoffrohre 64, 66 beziehungsweise von deren durch Endelemente 68 begrenzten und mit Wasser gefüllten Innenraum 70, durch welchen eine Zugstange 62 verläuft, wird durch eine Hydraulikpumpe 74 erreicht, welche strömungstechnisch über eine Hydraulikleitung mit dem Innenraum 70 verbunden ist.

Fig. 4 zeigt einen exemplarischen Abschnitt 80 einer radialen Außenfläche 82 einer Spannhülse, welche sich längs einer Achse 88 erstreckt. Die Außenfläche 82 ist durch einen in axialer Richtung verlaufenden exemplarischen Schlitz 92 unterbrochen. In einer Richtung 90 quer zur axialen Erstreckung 88 verlaufen längliche erhobene Bereiche 84. Die nicht-erhobenen Bereiche sind mit der Bezugsziffer 86 gekennzeichnet. Der summarische Anteil der erhobenen Bereiche an der radialen Außenfläche 82 beträgt in diesem Fall 10%.

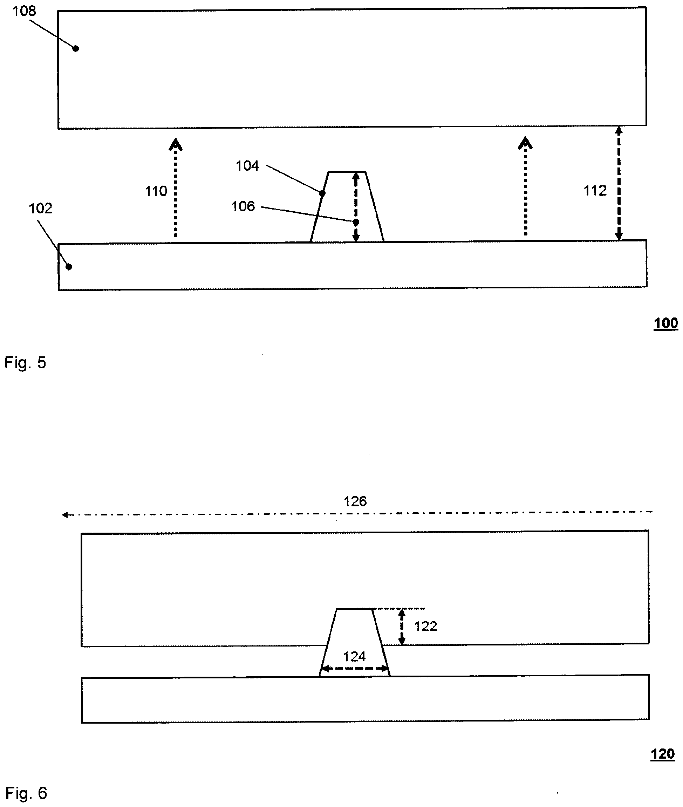

Fig. 5 zeigt in einer Skizze 100 eine unaufgeweitete Spannhülse 102 unter einer Wärmetauscherrohrwandung 108. Die Spannhülse weist an ihrer radialen Außenfläche einen erhobenen Bereich 104 mit trapezähnlichem Querschnitt und einer Höhe 106 von beispielsweise 0,5mm gegenüber dem nicht-erhobenen Bereich auf, welcher seinerseits im Abstand 112 von 0,8mm von der Rohrwandung 108 radial beabstandet ist. Durch eine mit Pfeilrichtung 110 angedeutete Druckeinwirkung weitet sich der Durchmesser der Spannhülse und der erhobene Bereich 104 drückt sich formschlüssig in die Rohrwandung 108.

Fig. 6 zeigt in einer Skizze 120 eine sich längs einer Achse 126 erstreckende aufgeweitete Spannhülse mit einem erhobenen Bereich mit einer axialen Breite 124, beispielsweise 0,3mm, welcher bis zu einer Tiefe 122 von beispielsweise 0,2mm in die Rohrwandung eingedrückt ist. Generell gilt für die Auslegung, dass die Einpressflächen so auszulegen sind, dass an den Einpressflächen die zulässige Flächenpressung des Rohres gezielt überschritten wird und das Rohr mit seinen Festigkeitswerte noch so viel Stabilität entgegen bringt, dass es sich so gut wie nicht vergrößert und dennoch den Scherkräften für die Zugbelastung standhält.

### Bezugszeichenliste

- 10: exemplarische erste Spannhülse
- 12: Erstreckungsachse
- 14: geschlitzter Trägerbereich
- 16: unaufgeweiteter Durchmesser
- 18: aufgeweiteter Durchmesser
- 20: Schlitze
- 22: erhobene Bereiche
- 24: geschlitzter Übergangsbereich
- 26: geschlitzter Bereich
- 30: exemplarische zweite Spannhülse in Wärmetauscherrohr
- 32: exemplarische zweite Spannhülse
- 34: erster geschlitzter Trägerbereich
- 36: Zwischenbereich
- 38: zweiter geschlitzter Trägerbereich
- 40: Wirbelstromsonde
- 42: Hydraulikpumpe
- 44: Druckleitung
- 46: Wärmetauscherrohr
- 50: exemplarische Verankerungskralle
- 52: exemplarische dritte Spannhülse
- 54: erhobener Bereich
- 56: unaufgeweiteter Außendurchmesser von Spannhülse
- 58: Wärmetauscherrohr
- 60: Innendurchmesser von Wärmetauschrohr
- 62: Zugstange
- 64: erstes Kunststoffrohr
- 66: zweites Kunststoffrohr
- 68: axiales Endelement
- 70: geschlossener Innenraum
- 72: Hydraulikleitung
- 74: Hydraulikpumpe
- 80: exemplarischer Abschnitt von radialer Außenfläche von Spannhülse
- 82: radiale Außenfläche
- 84: erhobene Bereiche von radialer Außenfläche
- 86: nicht-erhobene Bereiche von radialer Außenfläche
- 88: Erstreckungsachse Spannhülse
- 90: Richtung quer zu axialer Erstreckung Spannhülse
- 92: Schlitz
- 100: unaufgeweitete Spannhülse unter Wärmetauscherrohrwandung
- 102: Spannhülse
- 104: erhobener Bereich von Spannhülse
- 106: Höhe des erhobenen Bereiches
- 108: Wärmetauscherrohrwandung
- 110: Richtung einer Druckeinwirkung
- 112: radialer Abstand in unaufgeweitetem Zustand
- 120: unaufgeweitete Spannhülse in Kontakt mit Wärmetauscherrohrwandung
- 122: Eindringtiefe von Erhebung
- 124: Breite erhobener Bereich längs der axialer Erstreckung
- 126: Erstreckungsachse Spannhülse

## Patentansprüche

1. Verankerungskralle (50) für Wärmetauscherrohre (46, 58), umfassend
• eine hohlzylindrische Spannhülse (10, 32, 52, 102) aus einem federnden Material,
• wobei die die Spannhülse (10, 32, 52, 102) längs ihrer axialen Erstreckung (12, 88, 126) wenigstens einen axial geschlitzten (20, 92) Trägerbereich (14, 34, 38) aufweist,
• wobei im Inneren der Spannhülse (10, 32, 52, 102) Druckmittel zur Weitung (18) des Durchmessers (16) des Trägerbereiches (14, 34, 38) vorgesehen sind, um so einen Druck (110) von der radialen Außenfläche (82) des Trägerbereiches (14, 34, 38) der Spannhülse (10, 32, 52, 102) auf die Innenwandung (108) eines umgebenden Wärmetauscherrohres (46, 58) mit auf den Außendurchmesser (56) der Spannhülse (10, 32, 52, 102) angepasstem Innendurchmesser (60) auszuüben,
**dadurch gekennzeichnet,**
**dass** die radiale Außenfläche (82) des Trägerbereiches (14, 34, 38) erhobene Bereiche (22, 54, 86, 104) aufweist, wobei der summarische Anteil der erhobenen Bereiche an der radialen Gesamtaußenfläche (82) des Trägerbereiches (14, 34, 38) im Bereich von 2% bis 25% liegt.

2. Verankerungskralle nach Anspruch 1, **dadurch gekennzeichnet, dass** die erhobenen Bereiche (22, 54, 86, 104) plateauähnlich ausgeprägt sind.

3. Verankerungskralle nach Anspruch 1 oder 2, **dadurch gekennzeichnet, dass** die erhobenen Bereiche (22, 54, 86, 104) eine gestreckte Form aufweisen, welche zumindest vorwiegend quer zur axialen Erstreckung (90) der Spannhülse (10, 32, 52, 102) verläuft.

4. Verankerungskralle nach Anspruch 3, **dadurch gekennzeichnet, dass** mehrere erhobene Bereiche (22, 54, 86, 104) spiral- oder ringähnlich angeordnet sind.

5. Verankerungskralle nach Anspruch 3 oder 4, **dadurch gekennzeichnet, dass** die Breite (124) der erhobenen Bereiche (22, 54, 86, 104) längs der axialen Erstreckung (12, 88, 126) der Spannhülse (10, 32, 52, 102) zwischen 0,1mm und 1 mm liegt.

6. Verankerungskralle nach einem der Ansprüche 3 bis 5, **dadurch gekennzeichnet, dass** die erhobenen Bereiche (22, 54, 86, 104) längs der axialen Erstreckung (12, 88, 126) der Spannhülse (10, 32, 52, 102) einen Querschnitt aufweisen, welcher trapezähnlich ausgeprägt ist.

7. Verankerungskralle nach einem der vorherigen Ansprüche, **dadurch gekennzeichnet, dass** die radiale Höhe (106) der erhobenen Bereiche (22, 54, 86, 104) der Außenfläche (82) gegenüber der restlichen Außenfläche (86) des Trägerbereiches (14, 34, 38) im Bereich von 0,2mm bis 0,5mm erhöht ist.

8. Verankerungskralle nach einem der vorherigen Ansprüche, **dadurch gekennzeichnet, dass** die Spannhülse (10, 32, 52, 102) aus gehärtetem Stahl gefertigt ist.

9. Verankerungskralle nach einem der vorherigen Ansprüche, **dadurch gekennzeichnet, dass** die Druckmittel ein erstes (64) und ein zweites (66) ineinander verschachteltes Kunststoffrohr umfassen, welche im Inneren der Spannhülse (10, 32, 52, 102) im Trägerbereich (14, 34, 38) angeordnet sind und welche durch axiale Endelemente (68) begrenzt sind, so dass ein geschlossener Innenraum (70) gebildet ist, der durch Beaufschlagung mit einem Druck radial aufweitbar ist.

10. Verankerungskralle nach Anspruch 9, **dadurch gekennzeichnet, dass** die Kunststoffrohre (64, 66) aus PU, insbesondere Vibrathane, gefertigt sind.

11. Verankerungskralle nach Anspruch 9 oder 10, **dadurch gekennzeichnet, dass** der geschlossenen Raum (70) mit Wasser gefüllt ist, welches als Hydraulikflüssigkeit dient.

12. Verankerungskralle nach Anspruch 11, **dadurch gekennzeichnet, dass** die Druckmittel eine Hydraulikpumpe (42, 74) umfassen, welche strömungstechnisch mit dem geschlossenen Raum (70) verbunden ist.

13. Verankerungskralle nach einem der vorherigen Ansprüche, **dadurch gekennzeichnet, dass** zwei axial (12, 88, 126) mit einem Zwischenbereich (36) beabstandete axial geschlitzte Trägerbereiche (14, 34, 38) vorgesehen sind.

14. Verankerungskralle nach einem der vorherigen Ansprüche, **dadurch gekennzeichnet, dass** diese eine Wirbelstromsonde (40) aufweist, welche geeignet ist, fehlerbehaftete Bereiche eines die Spannhülse (10, 32, 52, 102) umgebenden Wärmetauscherrohres (46, 58) zu erkennen.

15. Verankerungskralle nach einem der vorherigen Ansprüche, **dadurch gekennzeichnet, dass** diese an einem ihrer axialen (12, 88, 126) Enden mit einer Greifziehstange oder einem Greifziehseil verbunden ist.

## Claims

1. Anchoring claw (50) for heat exchanger tubes (46, 58), comprising
• a hollow-cylindrical clamping sleeve (10, 32, 52, 102) made of a resilient material,
• wherein the clamping sleeve (10, 32, 52, 102) has at least one axially slotted (20, 92) support region (14, 34, 38) along its axial extent (12, 88, 126),
• wherein, in the interior of the clamping sleeve (10, 32, 52, 102), pressure means for expanding (18) the diameter (16) of the support region (14, 34, 38) are provided in order thereby to exert a pressure (110) from the radial outer surface (82) of the support region (14, 34, 38) of the clamping sleeve (10, 32, 52, 102) onto the inner wall (108) of a surrounding heat exchanger tube (46, 58) having an inside diameter (60) which is matched to the outside diameter (56) of the clamping sleeve (10, 32, 52, 102),
**characterized in that** the radial outer surface (82) of the support region (14, 34, 38) has raised regions (22, 54, 86, 104), wherein the total portion of the raised regions on the radial entire outer surface (82) of the support region (14, 34, 38) lies within the range of 2% to 25%.

2. Anchoring claw according to Claim 1, **characterized in that** the raised regions (22, 54, 86, 104) are formed in a manner similar to plateaux.

3. Anchoring claw according to Claim 1 or 2, **characterized in that** the raised regions (22, 54, 86, 104) have an extended shape which runs at least predominantly transversely with respect to the axial extent (90) of the clamping sleeve (10, 32, 52, 102).

4. Anchoring claw according to Claim 3, **characterized in that** a plurality of raised regions (22, 54, 86, 104) are arranged in a manner similar to spirals or rings.

5. Anchoring claw according to Claim 3 or 4, **characterized in that** the width (124) of the raised regions (22, 54, 86, 104) along the axial extent (12, 88, 126) of the clamping sleeve (10, 32, 52, 102) is between 0.1 mm and 1 mm.

6. Anchoring claw according to one of Claims 3 to 5, **characterized in that** the raised regions (22, 54, 86, 104) along the axial extent (12, 88, 126) of the clamping sleeve (10, 32, 52, 102) have a cross section which is formed in a manner similar to a trapezium.

7. Anchoring claw according to one of the preceding claims, **characterized in that** the radial height (106) of the raised regions (22, 54, 86, 104) of the outer surface (82) is raised in relation to the rest of the outer surface (86) of the support region (14, 34, 38) within the range of 0.2 mm to 0.5 mm.

8. Anchoring claw according to one of the preceding claims, **characterized in that** the clamping sleeve (10, 32, 52, 102) is manufactured from hardened steel.

9. Anchoring claw according to one of the preceding claims, **characterized in that** the pressure means comprises a first plastics tube (64) and a second plastics tube (66) which are nested one inside the other, are arranged in the support region (14, 34, 38) in the interior of the clamping sleeve (10, 32, 52, 102) and are bounded by axial end elements (68) such that a closed interior space (70) is formed which can be expanded radially by pressurization.

10. Anchoring claw according to Claim 9, **characterized in that** the plastics tubes (64, 66) are manufactured from PU, in particular Vibrathane.

11. Anchoring claw according to Claim 9 or 10, **characterized in that** the closed space (70) is filled with water which serves as a hydraulic fluid.

12. Anchoring claw according to Claim 11, **characterized in that** the pressure means comprise a hydraulic pump (42, 74) which is connected in terms of flow to the closed space (70).

13. Anchoring claw according to one of the preceding claims, **characterized in that** two axially slotted support regions (14, 34, 38) which are spaced apart axially (12, 88, 126) with an intermediate region (36) are provided.

14. Anchoring claw according to one of the preceding claims, **characterized in that** said anchoring claw has an eddy current probe (40) which is suitable for identifying defective regions of a heat exchanger tube (46, 58) surrounding the clamping sleeve (10, 32, 52, 102).

15. Anchoring claw according to one of the preceding claims, **characterized in that** said anchoring claw is connected at one of its axial (12, 88, 126) ends to a gripping pull rod or to a gripping pull cable.

## Revendications

1. Griffe d'ancrage (50) pour tubes échangeurs de chaleur (46, 58), comprenant :
- un manchon de serrage cylindrique creux (10, 32, 52, 102) en un matériau élastique,
- le manchon de serrage (10, 32, 52, 102) présentant le long de son étendue axiale (12, 88, 126) au moins une région de support (14, 34, 38) fendue axialement (20, 92),
- des moyens de pression pour élargir (18) le diamètre (16) de la région de support (14, 34, 38) étant prévus à l'intérieur du manchon de serrage (10, 32, 52, 102) afin d'exercer ainsi une pression (110) par la surface extérieure radiale (82) de la région de support (14, 34, 38) du manchon de serrage (10, 32, 52, 102) sur la paroi interne (108) d'un tube échangeur de chaleur enveloppant (46, 58) ayant un diamètre intérieur (60) adapté au diamètre extérieur (56) du manchon de serrage (10, 32, 52, 102),
**caractérisée en ce que**
la surface extérieure radiale (82) de la région de support (14, 34, 38) présente des régions rehaussées (22, 54, 86, 104), la somme des régions rehaussées constituant environ 2 % à 25 % de la surface extérieure totale radiale (82) de la région de support (14, 34, 38).

2. Griffe d'ancrage selon la revendication 1, **caractérisée en ce que** les régions rehaussées (22, 54, 86, 104) sont formées à la manière de plateaux.

3. Griffe d'ancrage selon la revendication 1 ou 2, **caractérisée en ce que** les régions rehaussées (22, 54, 86, 104) présentent une forme étirée qui s'étend au moins principalement transversalement à l'étendue axiale (90) du manchon de serrage (10, 32, 52, 102).

4. Griffe d'ancrage selon la revendication 3, **caractérisée en ce que** plusieurs régions rehaussées (22, 54, 86, 104) sont disposées en spirale ou en anneau.

5. Griffe d'ancrage selon la revendication 3 ou 4, **caractérisée en ce que** la largeur (124) des régions rehaussées (22, 54, 86, 104) le long de l'étendue axiale (12, 88, 126) du manchon de serrage (10, 32, 52, 102) est comprise entre 0,1 mm et 1 mm.

6. Griffe d'ancrage selon l'une quelconque des revendications 3 à 5, **caractérisée en ce que** les régions rehaussées (22, 54, 86, 104) le long de l'étendue axiale (12, 88, 126) du manchon de serrage (10, 32, 52, 102) présente une section transversale qui est formée en forme de trapèze.

7. Griffe d'ancrage selon l'une quelconque des revendications précédentes, **caractérisée en ce que** la hauteur radiale (106) des régions rehaussées (22, 54, 86, 104) de la surface extérieure (82) est augmentée de l'ordre de 0,2 mm à 0,5 mm par rapport au reste de la surface extérieure (86) de la région de support (14, 34, 38).

8. Griffe d'ancrage selon l'une quelconque des revendications précédentes, **caractérisée en ce que** le manchon de serrage (10, 32, 52, 102) est fabriqué en acier trempé.

9. Griffe d'ancrage selon l'une quelconque des revendications précédentes, **caractérisée en ce que** les moyens de pression comprennent un premier (64) et un deuxième (66) tube en plastique, qui sont emboîtés l'un dans l'autre, qui sont disposés à l'intérieur du manchon de serrage (10, 32, 52, 102) dans la région de support (14, 34, 38) et qui sont limités par des éléments d'extrémités axiaux (68) de telle sorte qu'un espace interne fermé (70) soit formé, lequel peut être élargi radialement par sollicitation par pression.

10. Griffe d'ancrage selon la revendication 9, **caractérisée en ce que** les tubes en plastique (64, 66) sont fabriqués en PU, en particulier en Vibrathane.

11. Griffe d'ancrage selon la revendication 9 ou 10, **caractérisée en ce que** l'espace fermé (70) est rempli d'eau qui sert de liquide hydraulique.

12. Griffe d'ancrage selon la revendication 11, **caractérisée en ce que** les moyens de pression comprennent une pompe hydraulique (42, 74) qui est connectée par une technique fluidique à l'espace fermé (70).

13. Griffe d'ancrage selon l'une quelconque des revendications précédentes, **caractérisée en ce que** deux régions de support fendues axialement (14, 34, 38) sont prévues de manière espacée axialement (12, 88, 126) avec une région intermédiaire (36).

14. Griffe d'ancrage selon l'une quelconque des revendications précédentes, **caractérisée en ce qu'**elle présente une sonde à courants parasites (40) qui est apte à détecter des régions défectueuses d'un tube échangeur de chaleur (46, 58) entourant le manchon de serrage (10, 32, 52, 102).

15. Griffe d'ancrage selon l'une quelconque des revendications précédentes, **caractérisée en ce qu'**elle est connectée au niveau de l'une de ses extrémités axiales (12, 88, 126) à une tige de traction de préhension ou à un câble de traction de préhension.
